# FASCICULE DE BREVET EUROPEEN

(11) **EP 0 649 393 B1**
(45) Date de publication et mention de la délivrance du brevet: **16.04.1997**
(21) Numéro de dépôt: 94915207.8
(22) Date de dépôt: 04.05.1994
(51) Int. Cl.: C03C 15/00, C03C 21/00, C03C 23/00

(54) **PROCEDE DE RENFORCEMENT D'OBJETS EN VERRE**
VERFAHREN ZUR VERSTÄRKUNG EINES GLASGEGENSTANDES
PROCESS FOR REINFORCING GLASS OBJECTS

(30) Priorité: 06.05.1993 FR 9305390
(43) Date de publication de la demande: 26.04.1995
(73) Titulaire: SAINT-GOBAIN VITRAGE, 92400 Courbevoie (FR)
(72) Inventeur: CHARRUE, Hervé, F-92500 Rueil-Malmaison (FR)
(74) Mandataire: Breton, Jean-Claude
(86) Numéro de dépôt international: FR9400516
(87) Numéro de publication internationale: WO9426675

(56) Documents cités:
- US-A- 3 843 472
- DATABASE WPI Week 9326, Derwent Publications Ltd., London, GB; AN 93-212902 & SU,A,1 747 413 (AVTOSTEKLO PRODN ASSOC) 15 Juillet 1992
- DATABASE WPI Week 8847, Derwent Publications Ltd., London, GB; AN 88-336490 & SU,A,1 395 597 (BUTAEV A M) 15 Mai 1988
- PATENT ABSTRACTS OF JAPAN vol. 17, no. 436 (C-1096) 12 Août 1993 & JP,A,05 097 479 (NIPPON ELECTRIC GLASS CO LTD) 20 Avril 1993
- DATABASE WPI Week 9326, Derwent Publications Ltd., London, GB; AN 93-212902 & SU,A,1 747 413
- DATABASE WPI Week 8847, Derwent Publications Ltd., London, GB; AN 88-336490 & SU,A,1 395 597
- PATENT ABSTRACTS OF JAPAN vol. 17, no. 436 (C-1096) 12 Août 1993 & JP,A,05 097 479

## Description

L'invention a trait aux techniques de renforcement de la résistance mécanique d'objets en verre notamment de plaques de verre planes ou bombées. Elle s'applique notamment aux vitrages avions ou plus généralement à tous les cas où une résistance mécanique élevée doit être garantie.

Il est bien connu que la résistance mécanique d'un objet en verre peut être notablement accrue par une opération dite de trempe consistant à placer la surface de l'objet sous compression préalable soit par voie thermique soit par voie chimique par un processus d'échange ionique qui conduit au remplicement en surface d'une partie des ions sodium par des ions plus gros tels que par exemple des ions potassium qui placent ainsi la surface de l'objet en compression.

La résistance mécanique finale obtenue dépend bien sur du type de traitement de trempe effectué mais aussi de la qualité de la surface avant traitement de l'objet. Dans le cas d'une plaque de verre, les défauts de surface les plus importants se rencontrent essentiellement prés des bords qui ont subi un traitement de découpe. Il est certes possible de minimiser ce problème par un polissage de qualité des bords, en employant par exemple la technique dite du joint rond poli, mais ce traitement est relativement délicat et il existe toujours le risque qu'une partie des bords soit polie de façon incomplète. Par ailleurs, les défauts ne sont pas uniquement localisés sur les bords même dans le cas où le verre est obtenu par un procédé ne nécessitant normalement pas de reprise par usinage, en particulier par le procédé aujourd'hui le plus usité, à savoir le procédé "float", ou d'autres procédés moins courants tels que le procédé "fusion Draw", le procédé "Fourcault" ou les procédés de laminage avec ou sans impression.

De ce fait, si on mesure la résistance mécanique d'un grand nombre de plaques trempées, on constate une assez large dispersion des niveaux effectifs de trempe et que, si la valeur moyenne est bien significativement plus grande que la valeur moyenne de la résistance mécanique d'une plaque non trempée, certaines plaques ont néanmoins des résistances mécaniques sensiblement identiques à la résistance mécanique initiale. Par ailleurs, les niveaux de contraintes de rupture peuvent parfois, surtout dans le cas de plaques de très grandes dimensions comme par exemple celles destinées à des pare-brise d'avions, s'avérer insuffisants en égard à l'application envisagée.

Il est connu notamment du brevet FR-A-2 138 710 ou son équivalent US-A-3 843 472, de renforcer un article en verre en rendant lisse par abrasion une partie de la surface et/ou de la tranche qui est ensuite soumises avant et/ou après la trempe chimique du verre, à un traitement dit de rectification au moyen d'un agent acide tel qu'une solution aqueuse d'acide fluorhydrique et éventuellement d'acide sulfurique. La résistance aux chocs obtenue par la combinaison du traitement d'abrasion avec le traitement de rectification est donnée comme bien supérieure à celle obtenue lorsque seul un des traitements est mis en oeuvre avant la trempe thermique et notamment bien supérieure à celle obtenue lorsque le verre ne subit qu'une simple rectification à l'acide fluorhydrique.

De fait, la rectification à l'acide fluorhydrique, seule, ne permet pas de supprimer de gros défauts de surface car l'attaque n'est pas précisément sélective : les parties concaves des défauts sont atteintes de même que les parties convexes, de sorte que pour l'essentiel, on ne fait que reproduire par translation la géométrie de la surface du verre - et par conséquent celle de ces défauts. Un petit gain, mais le plus souvent non significatif est toutefois obtenu car le traitement permet d'élargir légèrement les défauts et donc la résistance mécanique est un peu augmentée.

Pour être efficace, le procédé connu du brevet précité impose donc une abrasion soignée avec un traitement des bords par une succession de rubans abrasifs souples orientés différemment et différents par la nature et la grosseur des grains utilisés. Un tel traitement est long et doit de plus être effectué par du personnel particulièrement qualifié, sans qu'il ne soit possible de contrôler la qualité du traitement par des tests autres que des tests destructifs bien évidemment impossibles à réaliser systématiquement.

D'autre part, s'il est vrai que la majorité des défauts sont générés par les opérations de découpe et de ce fait, localisés sur les bords, les faces principales des objets en verre ne sont pas pour autant parfaites, même dans le cas d'un procédé ne nécessitant pas d'usinage des faces tel que le procédé float. Il est toujours possible de tenter d'y remédier par un polissage mais là encore, il s'agit d'un traitement supplémentaire long et coûteux où la moindre erreur peut générer des défauts pire que ceux que l'on tente d'éliminer. De toute façon, toute manipulation supplémentaire du verre peut entraîner la formation de nouveaux défauts. Il doit être entendu que les objets faisant l'objet de tels traitements de renforcement sont de toute façon des objets pour lesquels l'exigence de qualité dès le premier stade de fabrication est très grande, de sorte que le nombre de défauts est toujours bien plus faibles que pour un produit plus ordinaire.

Dans ces conditions, certains des objets produits présentent des résistances mécaniques mauvaises, et même si statiquement le cas est rare, il n'en reste pas moins que ces quelques cas sont très gênants quand il s'agit de produire un pare-brise avion ou un vitrage blindé de haute sécurité.

La présente invention a pour objet un procédé industriel de renforcement de la résistance mécanique d'objets en verre de tailles quelconques, sur l'intégralité de la surface, qu'ils aient ou non subi des usinages des bords, permettant d'obtenir des niveaux de contraintes à la rupture particulièrement élevés et surtout une faible dispersion des valeurs de résistance mécanique, notamment en ce qui concerne les points bas.

Cet objectif est atteint selon l'invention par un procédé de renforcement consistant dans la mise en compression préalable de la surface d'un objet en verre, une attaque acide de ladite surface sur une profondeur inférieure ou égale à la profondeur de verre comprimée et une protection de la surface traitée par l'attaque acide.

Le procédé selon l'invention consiste ainsi dans l'association d'un pré-traitement de trempe de la surface de l'objet - par voie thermique ou chimique - suivi d'une attaque acide de la surface qui est ultérieurement protégée soit de manière extrinsèque par une couche protectrice, soit - de façon préférée - de manière intrinsèque par une nouvelle trempe.

La mise en compression préalable de la surface de l'objet assure également la pré-contrainte en compression des défauts limitant de ce fait la diffusion à fond de fissure de l'acide et donc l'allongement relatif du défaut par rapport à la surface attaquée. En final, on réduit ainsi la taille du défaut jusqu'à celle assurant une augmentation de contrainte à rupture très importante. mais toutefois fonction de la surface testée.

Le pré-traitement de mise en compression préalable est réalisé de manière à assurer une couche en compression de profondeur et d'amplitude de pré-contrainte suffisante devant ce que l'on considère comme étant le plus gros défaut probable sur la surface considérée, cette taille de défaut étant proportionnelle à la surface et, pour les bords, dépendant du type de façonnage utilisé (bande abrasive, meule diamant, ...). La profondeur enlevée par l'acide sera directement fonction de la taille du plus gros défaut estimé sur la surface et pourra à la limite atteindre la profondeur de la couche en compression.

Le pré-traitement a, à la fois, un rôle purement mécanique - assurer une pré-contrainte en compression - et un rôle chimique car il peut assurer une homogénéisation du front d'attaque couplée à la pré-contrainte mécanique. Les auteurs de la présente invention ont remarqué que plus la cinétique d'attaque, c'est-à-dire la vitesse d'ablation pour une surface donnée est importante, plus la pré-contrainte devra être importante. Corrolairement, pour des faibles concentrations acides, une pré-contrainte par trempe thermique - donc plus faible en amplitude qu'une pré-contrainte par voie chimique mais affectant une profondeur plus importante - permet d'obtenir des résultats similaires à ceux obtenus pour un verre préalablement trempé chimiquement. La trempe thermique offre cependant l'inconvénient pour des petites surfaces de n'avoir qu'une qualité géométrique moyenne, doublée d'une génération de défauts lors du chauffage et du transport du verre avant et lors de la trempe. C'est pourquoi, ce pré-traitement est de manière préférée effectué par trempe chimique, car il conduit alors à une augmentation importante du nombre d'ions alcalins en surface ce qui tend à limiter la cinétique d'attaque par l'acide et ainsi homogénéise le front d'attaque.

Après l'attaque acide, on obtient une surface du type surface vierge, analogue à une surface fraîchement formée, comportant très peu de défauts ou du moins ne comportant que des défauts suffisamment petits de sorte que la résistance mécanique de la surface est très élevée. Mais cette propriété ne reste vraie que tant que l'on ne génère pas de nouveaux défauts de taille suffisamment importante pour abaisser la résistance mécanique à nouveau. Or, il est bien connu qu'une surface vierge est en fait une surface très sensible qui se dégrade très rapidement dès qu'elle est mise en présence de tout matériau susceptible de former une fissure. En fait, une simple manutention générant des contacts suffit à dégrader la surface obtenue par un tel traitement. Il convient donc de la protéger.

Dans une première variante de l'invention, cette protection est réalisée de manière extrinsèque par dépôt dès la fin de l'attaque acide, d'une barrière mécanique (résistance à la rayure, à l'indentation) et/ou chimique (résistance à la corrosion par l'eau, acides ...) déposée dans des conditions propres assurant l'absence de particules dures entre le verre et le dépôt, celles-ci pouvant être le siège d'indentation lors de l'utilisation. Ces dépôts protecteurs peuvent être de type polymères, couches minérales et/ou organiques, métalliques, etc... De préférence, ces couches sont directement formées sur la surface de l'objet, mais on peut également utiliser des films notamment des films polyuréthanes, à condition bien sûr de procéder à un étuvage (le film doit être réchauffé par exemple à une centaine de degrés) dans des conditions de propreté particulièrement rigoureuses.

De préférence, on utilisera à titre de couches d'oxydes métalliques des couches de type Ta₂O₅ connues pour leur résistance mécanique et à titre de film polymère, des films de polyuréthane, notamment un polyuréthane réticulé, déposé par exemple par trempage ou, de manière préférée par pulvérisation.

Des films polyvinylbutyral peuvent être également utilisés encore qu'ils ne soient généralement pas préférés en raison de leur caractère hydrophile.

Les films polymères - et dans une mesure analogue les couches métalliques ou d'oxydes métalliques - déposées pour protéger la surface du verre après l'attaque acide peuvent également avoir une fonction avantageuse dans le vitrage définitif. Un film de polyuréthane peut ainsi avoir une action contre les rayures, être en mesure de maintenir en place les éclats de verre en cas de bris du vitrage, jouer un rôle d'absorption des contraintes ou encore servir d'interface entre le verre et un film polymère d'assemblage tel un film de polyvinylbutyral, ceci notamment afin de diminuer l'effet d'écaillage à froid dû à la différence de dilatation à basse température du verre et du polyvinylbutyral. Par ailleurs, si ce film polyuréthane est déposé sur les 6 faces de la feuilles de verre, il permet une véritable encapsulation de celle-ci qui constitue en soi une très bonne projection.

Dans une seconde variante de l'invention plus spécialement préférée, cette protection est réalisée de manière intrinsèque en appliquant un nouveau renforcement au verre. Ce renfort est de préférence obtenu par une trempe chimique, en s'assurant que celle-ci soit réalisée juste après l'attaque chimique et en limitant le temps de chauffage avant immersion dans le bain de renforcement chimique, le maintien à température élevée dégradant la résistance intrinsèque de la surface attaquée par activation des cinétiques de corrosion à fond de fissure préalablement réduites. On obtient alors un produit présentant toutes les facilités des manipulations des produits renforcés chimiquement habituels, ainsi que leur résistance à l'endommagement, cette dernière étant directement en fonction de la profondeur échangée et de la pré-contrainte mécanique installée. On peut également protéger la plaque de verre par une trempe thermique mais si l'on veut conserver l'intégrité des deux surfaces, il faut proscrire le transport du verre sur rouleaux et assurer le chauffage et la trempe soit par un système à coussins d'air soit entre pinces ou tout autre procédé limitant le contact.

Il est parfois plus simple de protéger le verre immédiatement après l'attaque acide de manière extrinsèque plutôt que de manière intrinsèque mais cependant, la protection obtenue est moindre - sauf à utiliser un polymère en film mince ce qui limite les applications de l'objet traité, le film polymère ne supportant pas toujours une utilisation en face extérieure.

Une utilisation intéressante de la protection extrinsèque peut être son utilisation en tant que protection provisoire, d'une durée faible mais suffisante pour pouvoir installer une protection intrinsèque de type renforcement chmique.

A noter que si l'on procède directement à une attaque acide (suivie d'une trempe) sans pré-traitement de renforcement par trempe thermique ou chimique, on peut obtenir, si la concentration d'acide est bien choisie. une résistance finale du produit très grande. On doit cependant noter que la dispersion des résultats - niveau le plus bas, respectivement élevé, d'un lot d'échantillons traités - est augmentée lorsque la vitesse d'attaque augmente alors que la valeur moyenne de la contrainte à la rupture diminue. L'absence de pré-traitement de renforcement par trempe thermique ou chimique ne permet pas d'obtenir sur un lot de verre donné, une résistance mécanique minimale supérieure à celle du verre initial. et ce du fait de l'uniformité de l'attaque chimique entre la surface et les gros défauts. On obtient cependant des valeurs de résistance mécanique aussi élevées qu'avec un pré-traitement de renforcement. Seulement la dispersion est alors très grande, et ne permet pas d'assurer une valeur minimale de résistance mécanique supérieure à celle du verre de base.

Certaines applications nécessitent une valeur de résistance minimale bien supérieure à celle du verre initial, par réduction de la borne inférieure de la dispersion que seul le traitement - renforcement chmique ou thermique / attaque acide fluorhydrique + additifs / renforcement chimique ou thermique ou protection par dépôt de couche barrière mécanique/chimique - permet d'assurer.

On notera de plus que l'ajout de différents additifs, tel que l'acide sulfurique, permet de conserver la qualité optique initiale du verre, de l'améliorer le cas échéant Il est plus particulièrement avantageux d'utiliser une solution d'attaque contenant des tensio-actifs qui permettent une uniformisation de l'attaque.

D'autres détails et caractéristiques avantageuses de l'invention ressortent des tests comparatifs résumés ci-après, tous effectués à partir de plaques de verre float dont la composition chimique répond à la formulation suivante, exprimée en pourcentages pondéraux :

| | |
|---|---|
| SiO₂ | 71,7 |
| Al₂O₃ | 0,6 |
| CaO | 9,5 |
| MgO | 4 |
| Na₂O | 13,6 |
| So₃ | 0,2 |
| Divers | 0,4 |

Par divers, on entend la somme des composants individuellement en pourcentages pondéraux inférieurs à 0,1 %.

Des panneaux de 300x150x6mm ont été découpés avec une molette en diamant et les bords ont subi une abrasion mécanique soit simplement du type "arêtes abattues", traitement ordinairement appliqué à tout vitrage découpé pour éviter qu'il ne blesse le manipulateur et qui consiste à donner un profil biseauté en 3 pans, soit du type "joint rond poli". c'est-àdire que la tranche du verre est complètement arrondie pour avoir la forme d'une partie de circonférence, le traitement s'achevant par un polissage avec de l'alumine.

La trempe chimique (TC) a été réalisée en plaçant les panneaux dans un bain de nitrate de potassium à 460°C, pendant une durée de 48 heures. La profondeur échangée est de l'ordre de 40-60 microns.

L'attaque acide est effectuée à l'aide d'une solution aqueuse à 2,4 % en volume d'acide fluorhydrique à une température de 24°C. Pour attaquer une profondeur de l'ordre de 80 microns, cette attaque est menée pendant une durée de 4 heures.

Les résultats obtenus sont relatés dans le tableau suivant :

| **Préparation des bords** | **Traitement** | **Résistance** |
|---|---|---|
| Aucune (avant découpe) | - | 100 MPa |
| Joint rond poli | TC | 100-350 MPa |
| Arêtes abattues | TC | < 300 MPa |
| Arêtes abattues | HF | 60-800 MPa |
| Arêtes abattues | HF + TC | 120-130 MPa |
| Arêtes abattues | TC + HF | 300-800 MPa |
| Arêtes abattues | TC + HF + TC | 480-650 MPa |
| Joint rond poli | TC + HF + TC | 450-350 MPa |

Dans les deux derniers cas, il doit être noté que la résistance moyenne mesurée est de l'ordre de 550 MPa, autrement dit exceptionnellement élevée. Il est de plus à noter que le polissage des arêtes (joint rond poli) ne conduit pas à une résistance accrue et il est donc inutile de procéder à un tel traitement. beaucoup plus coûteux que le simple abattage des arêtes. Ceci constitue une différence importante avec les résultats obtenus selon l'art par une seule trempe thermique, la technique des arêtes abattues étant pratiquement inexploitable tant le nombre de casse est grand (même si certains vitrages obtenus ont une résistance de l'ordre de 300 MPa, la plupart des vitrages doivent être considérés comme ayant une résistance égale à O MPa en raison de cette casse). En particulier, il est possible d'obtenir des objets d'une résistance supérieure à 200 MPa pour une épaisseur de 3 mm, avec une épaisseur sous compression de plus de 600 microns. A titre comparatif, un vitrage automobile standard, ayant subi une trempe thermique a une résistance de l'ordre de 100-150 MPa, pour une même épaisseur sous compression alors qu'une trempe chimique ne permet généralement pas d'atteindre une profondeur d'échange supérieure à 100 microns.

A noter que la composition verrière mentionnée plus haut correspond à une composition en verre à vitre "ordinaire", du type verre sodo-calcique, donc composition non optimisée pour une trempe chimique et que les résistances mécaniques obtenues par le procédé selon l'invention sont sensiblement plus élevées lorsque sont utilisées des bases élaborées en vue de leur aptitude à des niveaux de trempe plus élevés.

A ce titre, citons par exemple un verre dont la composition est définie par les pourcentages pondéraux suivants :

| | |
|---|---|
| Si0₂ | 65 à 76 |
| B₂O₃ | 0 à 4 |
| Al₂O₃ | 1,5 à 5 |
| MgO | 4 à 8 |
| CaO | 0 à 4,5 |
| Na₂O | 10 à 18 |
| K₂O | 1 à 7,5 |

Ces éléments représentant au moins 96 % du poids du verre et respectant en outre les rapports pondéraux CaO:CaO+MgO compris entre O et 0,45 et K₂O/K₂O+Na₂O compris entre 0,05 et 0,35, de telles compositions permettant d'atteindre des renforcements élevés pour des grandes profondeurs d'échanges.

Les applications du procédé selon l'invention sont multiples. Il peut bien sûr être utilisé pour traiter des plaques de verre mais aussi des objets tout autres, tels que des flacons.

Si les traitements de renforcement sont du type trempe thermique, on obtient des profondeurs d'épaisseur sous compression particulièrement importantes et associées à des niveaux de contraintes remarquablement élevés pour ce type de trempe.

## Revendications

1. Procédé de renforcement d'un objet en verre, **caractérisé par** la mise en compression préalable de la surface dudit objet, une attaque acide de ladite surface sur une profondeur inférieure ou égale à la profondeur de verre comprimée et enfin une protection de la surface attaquée.

2. Procédé selon la revendication 1, **caractérisé en ce que** ladite protection est obtenue de manière intrinsèque par un traitement de trempe par voie thermique ou de préférence par voie chimique.

3. Procédé selon la revendication 1, **caractérisé en ce que** ladite protection est obtenue de manière extrinsèque par le dépôt d'une couche du type couche minérale, notamment métallique, couche organique, notamment greffage d'un silane.

4. Procédé selon la revendication 3, **caractérisé en ce que** l'objet subit ultérieurement un traitement de trempe chimique.

5. Procédé selon l'une des revendications précédentes, **caractérisé en ce que** la mise en compression préalable est effectuée au moyen d'une trempe thermique.

6. Procédé selon l'une des revendications 1 à 4, **caractérisé en ce que** la mise en compression préalable est effectuée au moyen d'une trempe chimique.

7. Procédé selon l'une des revendications précédentes, **caractérisé en ce que** l'attaque acide est effectuée à l'aide d'un agent contenant de l'acide fluorhydrique.

8. Procédé selon la revendication 7, **caractérisé en ce que** ledit agent contient également des additifs tensio-actifs.

9. Objet en verre trempé dont la résistance est supérieure à 200 Mpa, pour une épaisseur de 3 mm, avec une épaisseur sous compression supérieure à 600 µm.

10. Objet en verre trempé chimique dont la résistance est supérieure à 450 Mpa avec une épaisseur sous compression supérieure à 600 µm.

## Claims

1. Process for the reinforcement of a glass object, characterized by the prior compression of the surface of said object, an acid etching of said surface over a depth equal to or below the compressed glass depth and finally a protection of the etched surface.

2. Process according to claim 1, characterized in that said protection is obtained intrinsically by a thermal or preferably chemical tempering treatment.

3. Process according to claim 1, characterized in that said protection is obtained extrinsically by depositing a layer of the mineral and in particular metallic layer type or an organic layer and in particular grafting of a silane.

4. Process according to claim 3, characterized in that the object subsequently undergoes a chemical tempering treatment.

5. Process according to any one of the preceding claims, characterized in that the prior compression takes place by means of a thermal tempering.

6. Process according to any one of the claims 1 to 4, characterized in that the prior compression is performed by means of a chemical tempering.

7. Process according to any one of the preceding claims, characterized in that the acid etching is performed with the aid of an agent containing hydrofluoric acid.

8. Process according to claim 7, characterized in that said agent also contains surfactants.

9. Tempered glass object, whose strength exceeds 200 MPa for a thickness of 3 mm, with a thickness under compression exceeding 600 µm.

10. Chemically tempered glass object, whose strength exceeds 450 MPa, with a thickness under compression exceeding 600 µm.

## Patentansprüche

1. Verfahren zur Verfestigung eines Glaserzeugnisses, **dadurch gekennzeichnet, daß** zuerst die Oberfläche des Erzeugnisses unter Druckspannungen gesetzt, danach ein Säureangriff auf diese Oberfläche über eine Tiefe, die kleiner oder gleich der Tiefe des unter Druckspannungen gesetzten Glases ist, durchgeführt und schließlich die geätzte Oberfläche geschützt wird.

2. Verfahren nach Anspruch 1, **dadurch gekennzeichnet, daß** der Schutz innerlich durch eine Vorspannungsbehandlung auf thermischem oder vorzugsweise chemischem Wege erhalten wird.

3. Verfahren nach Anspruch 1, **dadurch gekennzeichnet, daß** der Schutz äußerlich durch Aufbringen einer insbesondere metallischen anorganischen Schicht und einer organischen Schicht, insbesondere eines gepfropften Silans, erhalten wird.

4. Verfahren nach Anspruch 3, **dadurch gekennzeichnet, daß** das Erzeugnis später chemisch vorgespannt wird.

5. Verfahren nach einem der vorhergehenden Ansprüche, **dadurch gekennzeichnet, daß** die vorherige Erzeugung von Druckspannungen mittels eines thermischen Vorspannvorgangs durchgeführt wird.

6. Verfahren nach einem der Ansprüche 1 bis 4, **dadurch gekennzeichnet, daß** die vorherige Erzeugung von Druckspannungen mittels eines chemischen Vorspannvorgangs durchgeführt wird.

7. Verfahren nach einem der vorhergehenden Ansprüche, **dadurch gekennzeichnet, daß** der Säureangriff mittels eines Flußsäure enthaltenden Mittels durchgeführt wird.

8. Verfahren nach Anspruch 7, **dadurch gekennzeichnet, daß** das Mittel auch oberflächenaktive Zusätze enthält.

9. Erzeugnis aus vorgespanntem Glas, dessen Festigkeit bei einer Dicke von 3 mm und einer unter Druckspannungen stehenden Dicke von über 600 µm mehr als 200 MPa beträgt.

10. Erzeugnis aus chemisch vorgespanntem Glas, dessen Festigkeit bei einer unter Druckspannungen stehenden Dicke von über 600 µm mehr als 450 MPa beträgt.
